# EUROPÄISCHE PATENTANMELDUNG

(11) **EP 2 604 462 A1**
(43) Veröffentlichungstag der Anmeldung: **19.06.2013**
(21) Anmeldenummer: 12189807.6
(22) Anmeldetag: 24.10.2012
(51) Int. Cl.: B60K 26/02, B60K 31/00, B60N 3/06

(54) **Verfahren und Steuerung zum Steuern eines aktiven Fahrpedals, Fahrpedalsystem mit einer solchen Steuerung, Computerprogramm und computerlesbares Medium dafür**

(30) Priorität: 12.12.2011 DE 102011088305
(71) Anmelder: ROBERT BOSCH GMBH, 70442 Stuttgart (DE)
(72) Erfinder: Grossmann, Alex, 71229 Leonberg (DE); Sieber, Udo, 74321 Bietigheim (DE); Henning, Daniel, 74372 Sersheim (DE); Biggel, Christoph, 70736 Fellbach (DE)

(57) **Zusammenfassung**

Ein Verfahren zum Steuern eines aktiven Fahrpedals umfasst die folgenden Schritte: Empfangen eines Fußablagesignals 67; Erhöhen einer Rückstellkraft 44 eines Fahrpedalhebels 12 durch einen Aktuator 14 in Reaktion auf den Empfang des Fußablagesignals 67; Rücknahme des Fußablagesignals 67; Vermindern der erhöhten Rückstellkraft 44 des Fahrpedalhebels 12 durch den Aktuator 14 in Reaktion auf die Rücknahme des Fußablagesignals 67. Das Vermindern der erhöhten Rückstellkraft 44 erfolgt über wenigstens eine Zwischenstufe 49.

## Beschreibung

### Gebiet der Erfindung

Die Erfindung betrifft ein Verfahren, eine Steuerung, ein Fahrpedalsystem, ein Computerprogamm und ein computerlesbares Medium zum Steuern eines aktiven Fahrpedals.

### Hintergrund der Erfindung

Einige Fahrzeugtypen werden heutzutage mit aktiven Fahrpedalen ausgestattet, wie es beispielsweise in der DE 103 24 811 A1 beschrieben ist. Mit aktiven Fahrpedalen können haptischen Rückmeldungen, über einem Aktuator am Fahrpedalhebel erzeugt werden und an den Fahrer über den Fahrpedalhebel abgegeben werden. Meistens sind die Rückmeldungen dazu da, den Fahrer auf eine Gefahrensituation aufmerksam zu machen. Die haptischen Rückmeldungen können aber auch als Komfortfunktion eingesetzt werden und somit den Fahrer während seiner Fahrt entlastend unterstützen. So werden haptische Rückmeldungen beispielsweise für die Schaltpunktsignalisierung eingesetzt.

Eine weitere Komfortfunktion ist die sogenannte Foot-Rest-Funktion (Fußablage-Funktion), bei der dem Fahrer die Möglichkeit gegeben wird, seinen Fuß auf dem Fahrpedalhebel abzulegen, ohne den Fahrpedalhebel durchzudrücken und dadurch eine Beschleunigung hervorzurufen. Dabei wird durch den Aktuator an dem aktiven Fahrpedal eine konstante Gegenkraft zu der vom abgelegten Fuß erzeugten Kraft erzeugt. Mit anderen Worten wird die Rückstellkraft des Fahrpedalhebels erhöht.

### Zusammenfassung der Erfindung

Es ist Aufgabe der Erfindung den Komfort des Fahrers eines Fahrzeugs mit aktivem Fahrpedal zu steigern.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Ein Aspekt der Erfindung betrifft ein Verfahren zum Steuern eines aktiven Fahrpedals. Ein aktives Fahrpedal kann einen Aktuator, beispielsweise ein Stellmotor, umfassen, der die Rückstellkraft eines Fahrpedalhebels des Fahrpedals einstellen kann.

Gemäß einer Ausführungsform der Erfindung umfasst das Verfahren die Schritte von: Empfangen eines Fußablagesignals; Erhöhen einer Rückstellkraft des Fahrpedalhebels durch einen Aktuator in Reaktion auf den Empfang des Fußablagesignals; Rücknahme des Fußablagesignals; und Vermindern der erhöhten Rückstellkraft des Fahrpedalhebels durch den Aktuator in Reaktion auf die Rücknahme des Fußablagesignals. Das Vermindern der erhöhten Rückstellkraft erfolgt dabei über wenigstens eine Zwischenstufe und/oder über einen vordefinierten Zeitraum. Beispielsweise kann die erhöhte Rückstellkraft nach der Rücknahme des Fußablagesignals kontinuierlich vermindert werden. Es ist möglich, dass die Rücknahme in der Form einer Rampe erfolgt.

Die Rückstellkraft des Fahrpedalhebels kann sich aus einer Grundkraft, die beispielsweise von einer oder mehrerer Rückstellfedern erzeugt wird, und einer Gegenkraft, die vom Aktuator erzeugt wird, zusammensetzen. Durch Erhöhen und Vermindern der Gegenkraft kann der Aktuator auch die Rückstellkraft erhöhen und vermindern.

Die Wegnahme der zusätzlichen Gegenkraft des Aktuators bzw. die Verminderung der Rückstellkraft des Fahrpedalhebels kann also rampenhaft und nicht sprunghaft erfolgen. Somit ist für den Fahrer kein plötzlicher vollständiger Gegenkraftverlust spürbar, wodurch eventuell ein größerer Fahrpedalweg, als er vom Fahrer beabsichtigt war, vermieden werden kann.

Hat der Fahrers den Wunsch zu beschleunigen, also den Fahrpedalhebel über die erhöhte Rückstellkraft hinaus zu betätigen, kann eine Rampenfunktion verwendet werden, um die zuvor erzeugte Gegenkraft kontinuierlich zu verringern. Wenn im Gegensatz dazu die Rücknahme der Gegenkraft sprunghaft erfolgen würde, kann es vorkommen, dass der Fahrer den Fahrpedalhebel ungewollt zu weit drückt, da die zuvor vorhandene Gegenkraft nicht mehr vorhanden ist.

Damit kann die eingangs genannte Fußablage-Funktion erweitert und komfortabler ausgestaltet werden. Die Fußablage-Funktion wird in der Regel in der Leerlaufstellung des Pedals aktiviert. Somit kann Verfahren zum Steuern des aktiven Fahrpedals auch in der Leerlaufstellung ausgeführt werden.

Das Fußablagesignal kann dabei ein Signal sein, dass anzeigt, dass die Fußablage-Funktion, wie sie durch das Verfahren durchgeführt werden kann, aktiviert werden soll. Dieses Signal kann vom Fahrer, beispielsweise durch Drücken eines Schalters, erzeugt werden, kann aber auch automatisch von einer Steuerung des Fahrzeugs generiert sein.

Gemäß einer Ausführungsform der Erfindung wird die Rückstellkraft von einer Normalkraft des Fahrpedalhebels beim Aktivieren der Fußablage-Funktion auf eine vordefinierte erhöhte Rückstellkraft erhöht und die erhöhte Rückstellkraft nach dem Deaktivieren der Fußablage-Funktion auf die Normalkraft vermindert. Mit anderen Worten kann vor dem Aktivieren der Fußablage-Funktion nur die (beispielsweise durch eine oder mehrere Rückstellfedern erzeugte) Normalkraft des Pedals aktiv sein. Die zusätzliche Gegenkraft wird dann vollständig vom Aktuator aufgebracht.

Gemäß einer Ausführungsform der Erfindung umfasst das Verfahren weiter den Schritt von Erkennen, dass die erhöhte Rückstellkraft zurückgenommen werden soll, dadurch, dass die vom Fahrer auf den Fahrpedalhebel ausgeübte Kraft einen vordefinierten Wert überschreitet. Beispielsweise kann das aktive Fahrpedal einen Sensor umfassen, der dazu ausgeführt ist, die aktuelle Stellung des Fahrpedalhebels oder die auf das Fahrpedal ausgeübte Kraft durch den Fahrer zu ermitteln. Wenn der Fahrpedalhebel aus der Leerlaufstellung ausgelenkt wird oder der Fahrer die Kraft auf den Fahrpedalhebel erhöht, kann dies als Wunsch des Fahrers interpretiert werden, zu beschleunigen und die Fußablage-Funktion zu deaktivieren.

Gemäß einer Ausführungsform der Erfindung umfasst das Verfahren weiter den Schritt von Erzeugen des Fußablagesignals, wenn sich der Fahrpedalhebel in einer Leerlaufstellung befindet und ein Fahrgeschwindigkeitsregler des Fahrzeugs aktiv ist. Auf diese Weise kann sichergestellt werden, dass die Fußablage-Funktion nur dann aktiviert wird, wenn das Fahrzeug die Geschwindigkeit ohne Störung durch den Fahrer selbständig regeln kann.

Ein weiterer Aspekt der Erfindung betrifft eine Steuerung für ein Fahrzeug, die dazu ausgeführt ist, das Verfahren so wie obenstehend und untenstehend beschrieben durchzuführen. Die Steuerung kann dazu Signale von dem Fahrpedalsensor und weiteren Komponenten des Fahrzeugs, wie etwa einem Fahrgeschwindigkeitsregler und/oder Abstandregler empfangen und dann aufgrund dieser Informationen bzw. Signale die Fußablage-Funktion aktivieren und dann entsprechende Steuersignale an den Aktuator des Fahrpedals senden.

Ein weiterer Aspekt der Erfindung betrifft ein Fahrpedalsystem mit einem aktiven Fahrpedal, das dazu ausgeführt ist, eine Rückstellkraft des Fahrpedalhebels einzustellen und eine Kraft auf den Fahrpedalhebel durch den Fahrer und/oder eine Stellung des Fahrpedalhebels zu erfassen. Das Fahrpedalsystem umfasst weiter eine Steuerung für das Fahrpedal, so wie sie obenstehend und untenstehend beschrieben wird.

Dabei ist zu verstehen, dass Merkmale des Fahrzeugs, der Steuerung und des Fahrpedalsystems Merkmale des Verfahrens sein können und umgekehrt.

Ein weiterer Aspekt der Erfindung betrifft ein Computerprogamm, das, wenn es auf einem Prozessor ausgeführt wird, den Prozessor dazu anleitet, die Schritte des Verfahrens zum Steuern eines aktiven Fahrpedals durchzuführen. Ein weiterer Aspekt der Erfindung betrifft ein computerlesbares Medium, auf dem ein derartiges Computerprogramm gespeichert ist. Beispielsweise kann die Steuerung des Fahrzeugs einen Prozessor und einen nicht-flüchtigen Speicher (ROM, EPROM usw.) umfassen, auf dem das Computerprogramm gespeichert ist.

### Kurze Beschreibung der Figuren

Im Folgenden werden Ausführungsbeispiele der Erfindung mit Bezug auf die beiliegenden Figuren detailliert beschrieben.
Fig. 1 zeigt ein Fahrzeug gemäß einer Ausführungsform der Erfindung.
Fig. 2 zeigt schematisch ein Kraft-Weg-Zeit-Diagramm für das Fahrpedal gemäß einer Ausführungsform der Erfindung.
Fig. 3 zeigt ein Diagramm über die Funktionalität zur Berechnung der Rückstellkraft eines Fahrpedals gemäß einer Ausführungsform der Erfindung.

Grundsätzlich sind identische oder ähnliche Teile mit den gleichen Bezugszeichen versehen.

### Detaillierte Beschreibung von Ausführungsbeispielen

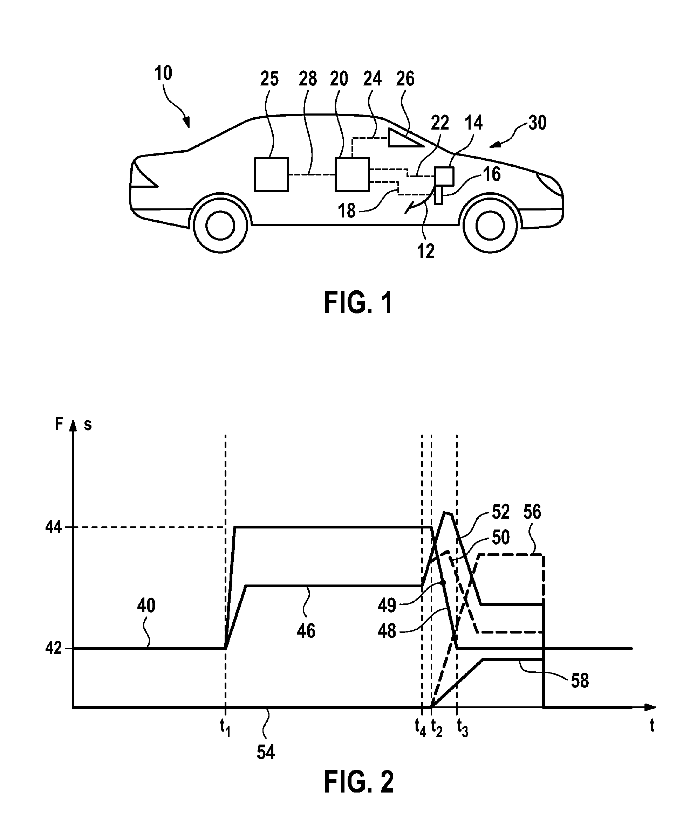

Fig. 1 zeigt ein Fahrzeug 10 mit einem aktiven Fahrpedal, das einen Fahrpedalhebel 12 umfasst. Das Fahrpedal umfasst einen Aktuator 14, beispielsweise einen Stellmotor, der dazu ausgeführt ist, dem Fahrpedalhebel 12 zusätzlich zu einer bereits vorhandeneren Rückstellkraft eine Gegenkraft aufzuprägen. Das Fahrpedal kann beispielsweise eine oder mehrere Rückstellfedern umfassen, deren Rückstellkraft von dem Aktuator 14 weiter erhöht wird.

Weiter umfasst das Fahrpedal einen Sensor 16, der dazu ausgeführt ist, die aktuelle Stellung des Fahrpedalhebels 12 und die von dem Fahrer erzeugte Kraft auf den Fahrpedalhebel 12 zu erfassen. Insbesondere kann der Sensor 16 erfassen, ob sich der Fahrpedalhebel 12 in einer Leerlaufstellung befindet.

Der Sensor 16 gibt ein Signal 18 aus, das von einer Steuerung 20 empfangen wird. Die Steuerung 20 kann ein Steuersignal 22 an den Aktuator 14 senden, und den Aktuator 14 anweisen, eine definierte Gegenkraft zu erzeugen.

Die Steuerung 20 ist weiter dazu ausgeführt Informationen bzw. Signale 24 von weiteren Komponenten 26 des Fahrzeugs, wie etwa einem Abstandsregelsystem und einem Fahrgeschwindigkeitsregler (Tempomat), zu empfangen.

Aus den empfangen Signalen bzw. Informationen 18, 24 berechnet die Steuerung 20, wie der Antrieb 25 des Fahrzeugs 10 anzusteuern ist und sendet entsprechende Steuersignale 28 an den Antrieb 25, der beispielsweise einen Verbrennungsmotor und/oder einen Elektromotor umfasst.

Die Steuerung 20 bzw. das Fahrpedalsystem 30, das das Fahrpedal und die Steuerung 20 umfasst, ist nun wie obenstehend und untenstehend beschrieben dazu in der Lage eine Fußablage-Funktion mit dem aktiven Fahrpedal durchzuführen.

Fig. 2 zeigt schematisch ein Kraft-Weg-Zeit-Diagramm für das Fahrpedal 12. Nach oben ist die Kraft F und der Weg s dargestellt, nach rechts ist die Zeit t dargestellt. Im Zeitverlauf wird die Fußablage-Funktion bei t₁ aktiviert und bei t₂ wieder deaktiviert.

Die Kurve 40 beschreibt die Gegenkraft 40 bzw. die Rückstellkraft 40 des Fahrpedalhebels 12 über die Zeit. Vor dem Zeitpunkt t₁ ist die Rückstellkraft 40 die bereits vorhandene Normalkraft 42 des Fahrpedalhebels 12 (beispielsweise die Kraft die durch die Rückstellfeder des Fahrpedalhebels 12 erzeugt wird). Nach Aktivierung der Fußablage-Funktion bei t₁ erhöht sich die Rückstellkraft 40 nahezu sprunghaft auf einen vordefinierten höheren Wert 44, indem der Aktuator 14 eine zusätzliche Gegenkraft erzeugt. Durch den Aktuator 14 wird die vordefinierte Gegenkraft 44 am Fahrpedal 12 für die Foot Rest-Funktion eingestellt.

Der vordefinierte höhere Wert 44 bzw. die erhöhte Rückstellkraft 44 kann über eine weitere Komponente 26 im Fahrzeug 10, beispielsweise eine Bedieneinheit, vom Fahrer eingestellt werden. Dies kann zusätzlich je nach Fahrertyp (beispielsweise schwer, mittel, leicht) erfolgen.

Nach dem Deaktivieren der Fußablage-Funktion wird die durch den Aktuator 14 erzeugte Gegenkraft nicht sprunghaft abgeschaltet, sondern kontinuierlich über einen vordefinierten Zeitraum bis zum Zeitpunkt t₃ zurückgenommen. Die Rückstellkraft 40 sinkt damit zwischen den Zeitpunkten t₂ und t₃ von der vordefinierten erhöhten Rückstellkraft 44 bis zur Normalkraft 42 des Fahrpedalhebels 12. Die Rückstellkraft 42 kann dabei linear bzw. in der Form einer Rampe 48 zurückgenommen werden und dabei mehrere Zwischenstufen 49 einnehmen.

Nach dem Zeitpunkt t₃ ist die Rückstellkraft 40 des Fahrpedalhebels 12 wieder auf dem Wert der Normalkraft 42.

Die Kurve 46 beschreibt die vom Fahrer aufgebrachte Kraft bis zu einem Zeitpunkt t₄ kurz vor dem Deaktivieren der Fußablage-Funktion bei t₂. Diese Kraft kann nach dem Aktivieren der Fußablage-Funktion bei t₁ kleiner als die Rückstellkraft 44 des Fahrpedalhebels 12 sein, da sich der Fahrpedalhebel 12 in der Leerlaufstellung im Anschlag befindet. Die aufgebrachte Kraft 46 des Fahrers wird vereinfacht als konstant dargestellt.

Die Fußablage-Funktion wird durch den Fahrer deaktiviert, indem er die Kraft auf den Fahrpedalhebel 12 ab t₄ an erhöht. Zum Zeitpunkt t₃ erkennt die Steuerung 20 den Wunsch des Fahrers zu beschleunigen, da die vom Fahrer auf den Fahrpedalhebel 12 aufgebrachte Kraft einen vordefinierten Wert überschritten hat. Alternativ könnte das System diesen Wunsch auch daran erkennen, dass der Fahrer den Fahrpedalhebel 12 eine vordefinierte Strecke aus der Leerlaufstellung durchgetreten hat (entgegen der erhöhten Rückstellkraft 44). Die eben genannte vordefinierte Kraft des Fahrers ist in diesem Fall größer als die erhöhte Rückstellkraft 44.

Damit wird die Foot Rest-Funktion inaktiv geschaltet und die zuvor veränderte Gegenkraft 44 der Foot Rest-Funktion nicht sprunghaft sondern über eine Rampe 48 zurückgenommen. Damit verändert sich auch die tatsächlich aufgebrachte Kraft 50 des Fahrers auf den Fahrpedalhebel 12. Nachdem er die Kraft aufgebracht hat, um der Steuerung 20 zu signalisieren, dass er beschleunigen möchte, ist der Kraftanstieg nicht mehr ungewollt groß, sondern der Fahrer kann seine gewollte Beschleunigung umsetzen. Er spürt keinen plötzlichen Gegenkraftverlust, der zu einer ungewollten zu großen Betätigung des Fahrpedalhebels 12 führen könnte.

Zum Vergleich beschreibt die Kurve 52 die aufgebrachte Kraft des Fahrers am Fahrpedalhebel 12 ohne die Rampenfunktion bei der gewollten Beschleunigung durch den Fahrer. Vom Fahrer wird in diesem Fall eine größere Kraft 52 am Fahrpedalhebel 12 aufgebracht, die aufgrund des plötzlichen Wegfalls der zuvor vorhandenen Gegenkraft, ungewollt ist.

Die Kurve 54 beschreibt den Pedalweg des Fahrpedalhebels 12 vor dem Deaktivieren der Fußablage-Funktion zum Zeitpunkt t₂, vor dem sich der Fahrpedalhebel 12 im losgelassen Zustand bzw. in der Leerlaufstellung befindet. Der Pedalweg 56 ohne die Rampe 48 ist ungewollt größer als der Pedalweg 58 mit der Rampe 48. Der Pedalweg 58 zeigt den tatsächlich gewünschten Pedalweg des Fahrers, da die Gegenkraft bzw. Rückstellkraft 44 nicht sprunghaft vermindert, sondern über eine Rampe 48 verringert wurde.

Die Fußablage-Funktion kann sich nach dem Zeitpunkt t₃ in einer Art Standby-Modus befinden bis der Fahrer die Funktion wieder beispielsweise über den Fahrgeschwindigkeitsregler aktiviert oder die Steuerung 20 automatisch erkennt, dass die Funktion wieder aktiviert werden kann, beispielsweise dadurch, dass der Fahrpedalhebel 12 durch den Fahrer wieder in die Leerlaufstellung bewegt wurde.

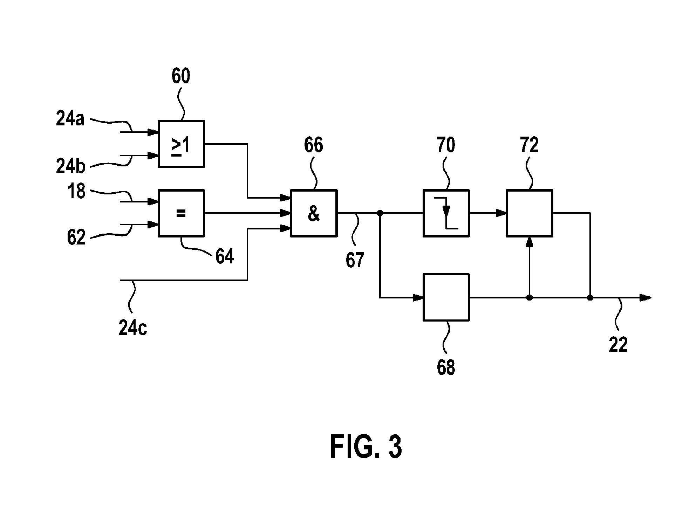

Fig. 3 zeigt ein Diagramm über die Funktionalität zur Berechnung der Rückstellkraft eines Fahrpedals bzw. die von der Steuerung 20 ausgeführte Fußablage-Funktion.

Die Funktion ist nur dann aktiviert, wenn ein Fahrgeschwindigkeitsregler 26, wie etwa ein Tempomat, aktiv ist und ein positives Signal 24a abgibt oder ein Abstandsregelungssystem 26, wie etwa ACC, aktiv ist und ein positives Signal 24b abgibt. Der Block bzw. das Modul 60 entscheidet, ob eines der Signale 24a, 24b vorliegt.

Außerdem muss sich der Fahrpedalhebel 12 in der Leerlaufposition befinden. Der Block 64 überprüft, ob das Signal 18 des Fahrpedalsensors 16 ein Leerlaufsignal 62 ist.

Weiter kann der Fahrer einstellen, ob die Fußablage-Funktion überhaupt aktiviert werden soll, beispielsweise über einen Schalter 26, der ein entsprechendes Signal 24c abgibt. Erkennt der Block bzw. das Modul 66, dass alle drei Bedingungen vorliegen, wird die Fußablage-Funktion aktiviert und der Block 66 erzeugt ein positives Fußablagesignal 67. Der Block bzw. das Modul 68 erzeugt dann, solange der Block 66 ein positives Fußablagesignal 67, liefert ein Steuersignal 22 für den Aktuator 14, der die Rückstellkraft des Fahrpedalhebels 12 auf die Kraft 44 erhöht. Wie oben beschrieben kann die Höhe der erhöhten Rückstellkraft 44 durch den Fahrer eingestellt werden.

Wenn eine der Bedingungen am Block 66 nicht mehr erfüllt ist, wird die Fußablage-Funktion deaktiviert. Der Block 68 liefert kein Ausgangssignal mehr und der Block 70 erkennt, dass das Signal vom Block 66 deaktiviert wurde und aktiviert den Block 72. Der Block 72 erzeugt dann ein Steuersignal 22, mit dem die Rückstellkraft am Fahrpedalhebel 12 von der erhöhten Rückstellkraft 44 auf die Normalkraft 42 vermindert wird. Dabei wird die Rückstellkraft der Fußablage-Funktion nicht sprunghaft sondern sanft, beispielsweise in der Form der Rampe 48, zurückgenommen.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Steuern eines aktiven Fahrpedals, das Verfahren umfassend die Schritte:
Empfangen eines Fußablagesignals (67);
Erhöhen einer Rückstellkraft (44) eines Fahrpedalhebels (12) durch einen Aktuator (14) in Reaktion auf den Empfang des Fußablagesignals (67);
Rücknahme des Fußablagesignals (67);
Vermindern der erhöhten Rückstellkraft (44) des Fahrpedalhebels (12) durch den Aktuator (14) in Reaktion auf die Rücknahme des Fußablagesignals (67).
**dadurch gekennzeichnet, dass**
das Vermindern der erhöhten Rückstellkraft (44) über wenigstens eine Zwischenstufe (49) erfolgt.

2. Verfahren nach Anspruch 1,
wobei die Rückstellkraft von einer Normalkraft (42) auf eine vordefinierte erhöhte Rückstellkraft (44) erhöht wird und die erhöhte Rückstellkraft (44) auf die Normalkraft (42) vermindert wird.

3. Verfahren nach Anspruch 1 oder 2,
wobei die erhöhte Rückstellkraft (44) nach der Rücknahme des Fußablagesignals (67) kontinuierlich vermindert wird.

4. Verfahren nach Anspruch 3,
wobei die Rücknahme in der Form einer Rampe (48) erfolgt.

5. Verfahren nach einem der vorhergehenden Ansprüche, weiter umfassend den Schritt:
Erkennen, dass die erhöhte Rückstellkraft (44) zurückgenommen werden soll, dadurch, dass die vom Fahrer auf den Fahrpedalhebel (12) ausgeübte Kraft einen vordefinierten Wert überschreitet.

6. Verfahren nach einem der vorhergehenden Ansprüche, weiter umfassend den Schritt:
Erzeugen des Fußablagesignals (67), wenn sich der Fahrpedalhebel (12) in einer Leerlaufstellung befindet und ein Fahrgeschwindigkeitsregler (26) des Fahrzeugs aktiv ist.

7. Steuerung (20) für ein Fahrzeug (10), die dazu ausgeführt ist, das Verfahren nach einem der Ansprüche 1 bis 6 durchzuführen.

8. Fahrpedalsystem (30), umfassend:
ein aktives Fahrpedal, das dazu ausgeführt ist, eine Rückstellkraft (40) eines Fahrpedalhebels (12) einzustellen und eine Kraft auf den Fahrpedalhebel (12) durch den Fahrer und/oder eine Stellung des Fahrpedals (12) zu erfassen; und
eine Steuerung (20) nach Anspruch 7.

9. Computerprogamm, das, wenn es auf einem Prozessor ausgeführt wird, den Prozessor dazu anleitet, die Schritte des Verfahrens nach einem der Ansprüche 1 bis 6 auszuführen.

10. Computerlesbares Medium, auf dem ein Computerprogramm nach Anspruch 9 gespeichert ist.
